# EUROPEAN PATENT APPLICATION

(11) **EP 4 458 440 A1**
(43) Date of publication of application: **06.11.2024**
(21) Application number: 24170632.4
(22) Date of filing: 16.04.2024
(51) Int. Cl.: A63F 13/54, A63F 13/215, A63F 13/22

(54) **3D AUDIO ADJUSTMENT IN A VIDEO GAMING SYSTEM**

(30) Priority: 28.04.2023 GB 202306365
(71) Applicant: Sony Interactive Entertainment Europe Limited, London W1F 7LP (GB)
(72) Inventor: EDER, Michael, London, W1F 7LP (GB); BUCHANAN, Christopher, London, W1F 7LP (GB); BARN, Lewis, London, W1F 7LP (GB)
(74) Representative: Gill Jennings & Every LLP

(57) **Abstract**

A method of adjusting an in-game audio output of a video gaming system, where the video gaming system comprises loudspeakers for outputting the in-game audio output and a user device comprising a microphone, the method comprising: outputting a calibration signal with the loudspeakers on a continual basis during use of the video gaming system, the calibration signal comprising an audio signal; receiving the calibration signal with the microphone of the user device and repeatedly determining the location of the user device relative to the loudspeakers based on the received calibration signal to monitor a varying location of the user during use of the video gaming system; repeatedly adjusting the in-game audio output based on the determined location of the user device during use of the video gaming system.

## Description

### FIELD OF THE INVENTION

The present invention relates to the field of video gaming systems and methods, and provides a system and method for improving three dimensional audio output during gameplay on a video gaming system.

### BACKGROUND

Three-dimensional audio (also referred to as positional or localised audio) involves the processing of audio to replicate natural sound waves as they arrive at the human ear, to provide the impression they emanate from a particular point in space. There is an increasing interest in providing three-dimensional audio in video gaming systems to provide localisation of gameplay sounds, such that the user experiences them as coming from positions around them, providing an enhanced immersive experience of the video game.

3D audio is processed by applying HRTFs (Head Related Transfer Functions) to output audio to approximate how a user would hear a sound coming from a particular location. A HRTF characterises how an ear receives a sound from a point in space and depends on a number of factors, unique to listener, such as the size and shape of the head, ears and ear canal. Together these factors transform the sound, boosting some frequencies and attenuating others, so as to affect how it is perceived.

To process a localised received sound *y(f, t)*, a signal *x(f, t)* transmitted by the sound source is combined with (e.g. multiplied by, or convolved with) the HRTF *H(f).* Since the HRTF is unique to the user, increased performance is achieved by applying an HRTF that is closer to the user's actual HRTF. A user's HRTF can be sampled experimentally to accurately reconstruct it, or it can be approximated, for example by asking the user to select a digital HRTF that provides the best localisation effects for them.

Two different HRTF filters must be applied to the sound to be received by the left and right ear to mimic the different response of the user's left and right ear to a sound generated at a particular position in space. For this reason, 3D audio effects are currently best achieved through the use of headphones where the sound received by each ear can be closely controlled. When 3D audio is provided through loudspeakers (for example two or more speakers), the localisation effects are severely restricted since the sound waves received by each ear cannot be as closely controlled. For example, the listener will experience crosstalk effects, where each ear can hear the signal produced by both speakers, which destroys the localisation effects.

Given there is a desire to provide 3D audio and the improved immersive experience that it facilitates to all users, irrespective of the audio equipment they own, there is a need for improvements to 3D audio when provided through loudspeakers.

### SUMMARY OF INVENTION

In a first aspect of the invention there is provided a method of adjusting an in-game audio output of a video gaming system, where the video gaming system comprises loudspeakers for outputting the in-game audio output and a user device comprising a microphone, the method comprising: outputting a calibration signal with the loudspeakers on a continual basis during use of the video gaming system, the calibration signal comprising an audio signal; receiving the calibration signal with the microphone of the user device and repeatedly determining the location of the user device relative to the loudspeakers based on the received calibration signal to monitor a varying location of the user during use of the video gaming system; repeatedly adjusting the in-game audio output based on the determined location of the user device during use of the video gaming system.

By outputting a calibration signal continually throughout use of the video gaming system, using this to track the location of the user and repeatedly adjusting the in-game audio, it is possible to compensate for the changing location of the user. In particular, rather than having a fixed audio sweet spot in which the user must remain positioned, the method allows for movement of the sweet spot with the user, so that the user's experience of the in-game audio is improved. Whereas in prior art video gaming systems, the use of loudspeakers results in a variation in the audio experience depending on where the user is positioned, by tracking their location relative to the loudspeakers, this variation may be removed by compensation filters applied to the audio output to enhance the user experience, allowing them to move freely during gameplay. The use of audio as a means to track the location requires minimal additional equipment, and since the audio emanates from the loudspeakers themselves, provides an efficient and accurate mechanism to identify the users location relative to the loudspeakers.

In this context "on a continual basis" is intended to mean that the calibration signal is output over a period of time of use of the video gaming system, preferably during gameplay on the video gaming system. The received calibration signal may be referred to as a "return signal" and is dependent on the location of the user.

"Adjusting the in-game audio" preferably comprises applying an adjustment to the audio output by each loudspeaker to compensate for the location of the user. This preferably involves applying a signal processing technique, i.e. a respective filter applied to the audio output of each loudspeaker.

Preferably the calibration signal comprises a wide band audio signal. For example the calibration signal comprises frequencies spanning a range of 20 Hz to 20,000 Hz or a range of frequencies across a band of at least 5,000, preferably 10,000 Hz. By using a wide range of frequencies, the calibration signal is more effective and accurate at compensating for user position. In some preferable examples the calibration signal comprises white noise.

The in-game audio preferably comprises three-dimensional audio and adjusting the in-game audio output comprises: applying a correction to the in-game audio output to compensate for the varying location of the user relative to the loudspeakers. This preferably comprises applying a correction to the audio output of each loudspeaker. This preferably comprises applying a location-dependent filter to the output of each loudspeaker.

The method preferably comprises: determining a crosstalk correction based on the determined location of the user device relative to the loudspeakers; applying the crosstalk correction to the in-game audio output. Determining a crosstalk correction preferably comprises determining a filter to apply to the audio output of each loudspeaker so as to reduce the intensity of the audio output received by an intended, i.e. opposite, ear of the user. In this way, the audio received by each ear of the user can be closely controlled to provide improved localisation of audio and improved 3D audio effects.

The method may comprise determining a HRTF filter based on the determined user location and applying the HRFT filter to the in-game audio output. The method may involve adjusting an HRTF filter based on the determined user location.

Outputting the calibration signal with loudspeakers on a continual basis preferably comprises: outputting the calibration signal continuously or on a recurring basis. A recurring basis may encompass outputting the calibration signal periodically or intermittently during use of the video gaming system.

The method may comprise determining a break in gameplay and outputting the calibration signal during the break in gameplay. In this way, the calibration signal does not disrupt gameplay or detract from the in-game audio experience, since the calibration signal is only output when there is a break in gameplay.

The method preferably comprises one or more of: determining when the gameplay is paused and outputting the calibration signal when the gameplay is paused; determining a break when game data is loading and outputting the calibration signal during the break when game data is loading.

Preferably the calibration signal is provided by part of the in-game audio. In this way, no additional audio signal need by used for the calibration signal that may detract from the in-game audio and the user will not be aware of the calibration signal being sent.

Preferably the calibration signal comprises one or more of: a recurring segment of music; a recurring sound effect. In particular, the calibration signal may be a component of the in-game audio that repeats during gameplay, such as a common sound effect or music component. This allows the calibration signal to be sent regularly for the calibration to be performed.

Preferably the method comprises determining a portion of the in-game audio to use as a calibration signal, receiving the portion of in-game audio and determining the location of the user device relative to the loudspeakers based on the received portion of in-game audio. In this way, the calibration signal need not be encoded or predetermined for each game, but may be configured by the videogaming system for any game, by selecting a portion of the in-game audio to use as the calibration signal, preferably at run-time. Preferably the method comprises determining a time of flight of the selected portion of in-game audio to the microphone to determine the location of the user device.

Preferably the method comprises: determining a current stage of gameplay; selecting a portion of the in-game audio at the determined stage of gameplay to use as a calibration signal; receiving the portion of in-game audio with the microphone of the user device; determining the location of the user device relative to the loudspeakers based on the received portion of in-game audio to monitor a varying location of the user during use of the video gaming system.

Preferably the method comprises determining multiple portions of in-game audio to use as a calibration signal, where each portion of in-game audio comprises different frequencies. It is advantageous to use a wide-band audio signal as the calibration signal. However, using white noise or similar wide-band signal may be disruptive to the user. By selecting multiple individual components of the in-game audio to use as a calibration signal, where together the individual components span a wide range of frequencies, this problem may be overcome and a wide range of frequencies may be used that do not disrupt gameplay. For example, the method could use the sound of a bird, the sound of thunder, and the sound of rain, which together span a large range of frequencies but form part of the normal in-game audio, so as not to disrupt the user experience.

In some examples of the invention, the calibration signal may comprise an ultrasound signal. Since ultrasound cannot be heard by the user, there is no disruption to the user experience.

Preferably the method comprises outputting an ultrasound signal continuously or periodically during gameplay. This allows the location calibration to be performed regularly.

Preferably the user device comprises a controller, the method comprising: receiving the calibration signal with a microphone of the controller. Since the controller will always be held by the user, and in a fairly consistent position relative to the user's ears, the controller may be used as a means to determine the user location. It further provides a convenient location to integrate a microphone.

Preferably the method comprises receiving the calibration signal with two or more microphones and determining the position of the user based on the signal received by each microphone. By using multiple microphones the user's location may be determined with greater precision. The system may comprise a single user device with multiple microphones or multiple user devices, each with a respective microphone or multiple microphones.

The method preferably comprises estimating the position of the user relative to the loudspeakers based on the determined location of the user device; repeatedly adjusting the in-game audio based on the estimated position of the user during use of the video gaming system. In particular the method may comprise calculating the position of the user's ears based on the determined location of the user device. The method may comprise determining an offset, representing the displacement of each of the user's ears relative to the location of the microphone of the user device and determining the location of the user's ear's based on the offset. The offset may be predetermined, for example by a calibration routine. the offset my be specific to a user.

Determining the location of the user device relative to the loudspeakers based on the received calibration signal preferably comprises: determining a time-of-flight measurement of each of two or more calibration signals output by two or more respective loudspeakers to the microphone of the user device; determining the location of the user device relative to the loudspeakers based on the time-of-flight measurements; repeatedly adjusting the in-game audio based on the estimated position of the user during use of the video gaming system. A time-of-flight measurement allows the position of the microphone relative to the loudspeakers to be determined in a straightforward calculation with high accuracy.

In a further aspect of the invention there is provided a computer program comprising instructions which, when executed by a computer of a video gaming system, cause the computer to control the video gaming system to perform a method according to any of claims 1 to 14.

In a further aspect of the invention there is provided a video gaming system comprising an audio output for connection to loudspeakers; an input connection for connection to a user device comprising a microphone; a processor configured to: output a calibration signal to the audio output on a continual basis during use of the video gaming system, the calibration signal comprising an audio signal; receive a return signal from input connection when the calibration signal is received with the microphone of the user device and repeatedly determine the location of the user device relative to the loudspeakers based on the received return signal to monitor a varying location of the user during use of the video gaming system; repeatedly adjust the in-game audio output based on the determined location of the user device during use of the video gaming system. This aspect of the invention may incorporate any one or more of the features described above. The video gaming system may further comprise a plurality of loudspeakers connected to the audio output. The video gaming system may further comprises a user device comprising a microphone, the user device connected to the input connection. The user device may be a controller.

### BRIEF DESCRIPTION OF DRAWINGS

Figure 1A illustrates a the perception of a real sound source from a point in space;
Figure 1B illustrates a user receiving processed audio through headphones to give the perception of the sound source being positioned at a point in space;
Figure 2 illustrates the cross talk effects when providing audio through loudspeakers;
Figure 3 illustrates a method and system according to the present invention;
Figure 4 illustrates a method flow diagram of a method according to the present invention;
Figure 5 illustrates a video gaming system according to the present invention.

### DETAILED DESCRIPTION

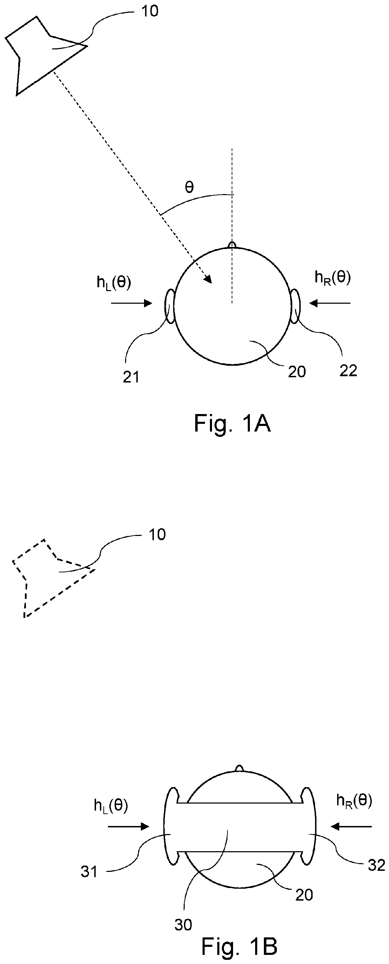

Fig. 1A schematically illustrates the perception of a real sound source 10, offset from a user 20. As shown in Fig. 1A, the real sound source 10 is in front of and to the left of the user 20, at an azimuth angle θ in a horizontal plane relative to the user 20. The effect of positioning the sound source 10 at the angle θ can be modelled as a frequency-dependent filter h_{L}(θ) affecting the sound received by the user's left ear 21 and a frequency-dependent filter h_{R}(θ) affecting the sound received by the user's right ear 22. The combination of h_{L}(θ) and h_{R}(θ) is a head-related transfer function (HRTF) for azimuth angle θ.

More generally, the position of the sound source 10 can be defined in three dimensions (e.g. range r, azimuth angle θ and elevation angle ϕ), and the HRTF can be modelled as a function of three-dimensional position of the sound source relative to the user.

The sound received by the each of the user's ears is affected by numerous hearing factors, including the following examples:
- The distance w_{H} between the user's ears 21, 22 (which is also called the "head width" herein) causes a delay between sound arriving at one ear and the same sound arriving at the other ear (an interaural time delay).
- Each of the user's ears has a different frequency-dependent sound sensitivity (i.e. the user's ears have an interaural level difference).
- The shape of the user's outer ear (pinna) creates one or more resonances or antiresonances, which appear in the HRTF as spectral peaks or notches with significant amplitude changes at precise frequencies. Further spectral peaks or notches may be associated with other physical features of the user. For example, the user's shoulders and neck may affect how sound is reflected towards their ears. For at least some frequencies, more remote physical features of the user such as torso shape or leg shape may also be relevant.

Each of these factors may be dependent upon the position of the sound source. As a result, these factors are used in human perception of the position of a sound source. In general, HRTFs are complex and cannot be straightforwardly modelled as continuous function of frequency and sound source position. To reduce storage and processing requirements, HRTFs are commonly stored as tables of HRTFs for a finite set of sound source positions, and interpolation may be used for source sources at other positions. An HRTF for a given sound source position may be stored as a Finite Impulse Response (FIR) filter, for example.

Fig. 1B schematically illustrates an equivalent virtual sound source offset from a user in audio provided by headphones 30. As shown in Fig. 1B, by applying the HRTF to the generated audio, the virtual sound source 10 is simulated to be at the azimuth angle θ in a horizontal plane relative to the user 20. This is achieved by incorporating the HRTF for a sound source at azimuth angle θ as part of the sound signal emitted from the headphones. More specifically, the sound signal from left speaker 31 of the headphones 30 incorporates h_{L}(θ) and the sound signal from right speaker 32 of the headphones 30 incorporates h_{R}(θ). Additionally, inverse filters h⁻¹_{L0} and h⁻¹_{R0} may be applied to the emitted signals to avoid perception of the "real" HRTF of the left and right speakers 31, 32 at their positions L0 and R0 close to the ears.

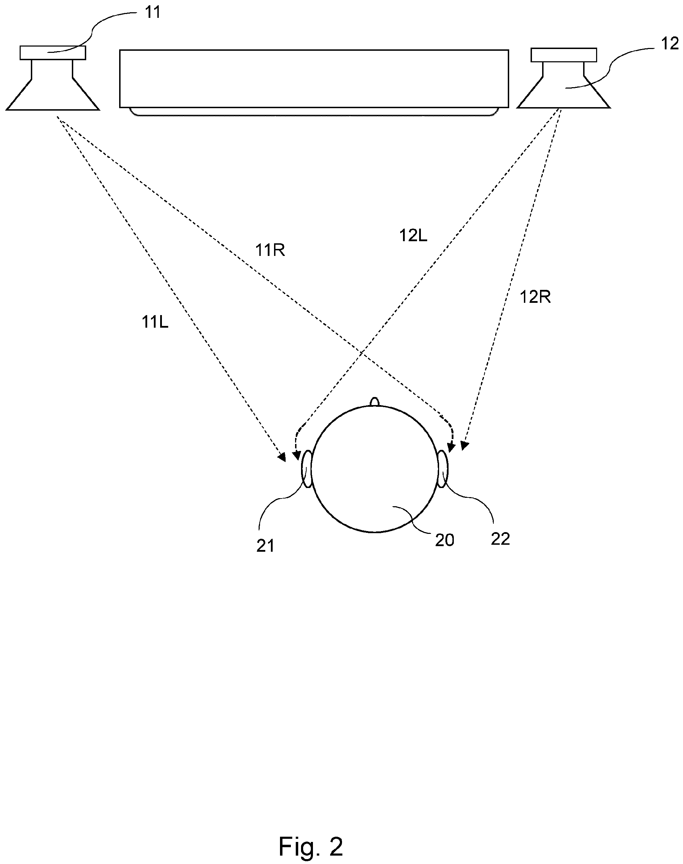

When providing the audio via headphones 30, as in figure 1B, the sound provided to the left and right ear can be closely controlled to provide localisation of sounds and 3D audio effects. However, there are a number of challenges in providing 3D audio when using speakers, as illustrated in Figure 2. Most notably, when using loudspeakers, the left ear will hear both the signal 11L from the left speaker 11 and the signal 12L right speaker 12, and the right ear will hear the signal 12R from the right speak, as well as the signal 11R from the left speaker. These signals will be received by the ears 21,22 at differing delays, which will vary based on the location of the user. This crosstalk between the speakers 11, 12 will destroy much of the intended 3D audio effects

These effects may be compensated to some extent by applying an adjustment to audio emitted from each of the left 11 and right 12 speakers. For example, a cross talk cancellation scheme may be implemented by applying appropriate signal processing filters to each of the left and righthand speaker 11, 12 to mitigate this effect. The filters that must be applied depend on the specific user location relative to the speakers. Existing filters for providing 3D audio on loudspeakers are imperfect and result in a very tight "sweet spot" location, where the user must be positioned to experience the 3D audio effects. Outside of this sweet spot location the filters will not be suitable to compensate for the crosstalk effects and the user will not experience 3D audio. Even movement of a few cm can result in the filters no longer being effective and can even result in worsening of the effects as a change in position may result in the filters providing constructive addition rather than the intended destructive addition to remove the crosstalk effect, worsening the crosstalk experienced by a user. Since a user is likely to move significantly more than this when playing a video game, there is a need for compensation methods that are more robust to changing user location.

In addition to crosstalk effects, the arrangement of the room will also affect the experience of the sound by the user. For example, sound will reflect off the walls, ceiling and objects in the room, and undergo varying attenuation depending on the arrangement and materials of these objects. These effects will also change the sound being received at the user's ears and thus require compensation to ensure the sound is provided as intended to give the impression of the sound emanating from a particular source.

The present invention seeks to make improves to the way in which the sound can be adjusted to compensate for changing user location.

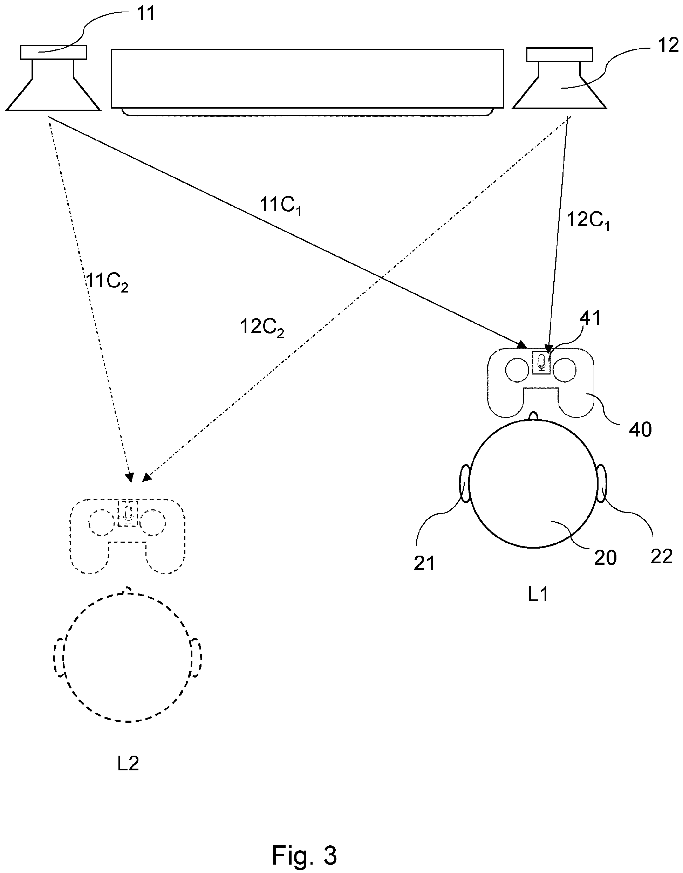

Figure 3 schematically illustrates a computer implemented method of adjusting the in-game audio output of a video gaming system according to the present invention, where the video gaming system comprises loud speakers 11, 12 for outputting the in-game audio output and a user device 40 comprising a microphone 41. The method comprises outputting a calibration signal 11C, 12C with the loudspeakers 11, 12 on a continual basis during use of the video gaming system. The calibration signal comprises an audio signal, i.e. a sound wave emitted by the loudspeakers 11, 12. The method involves receiving the calibration signal 11C, 12C with the microphone 41 of the user device 40 and repeatedly determining the location of the user device 40 relative to the loudspeakers 11, 12 based on the received calibration signal 11C, 12C to monitor a varying location of the user 20 during use of the video gaming system. The method then involves repeatedly adjusting the in-game audio output based on the determined location of the user device 40 during use of the video gaming system.

In this way, an adjustment (i.e. a signal processing filter) may be applied to the audio output of each of the left speaker 11 and right speaker 12 to compensate for the changing user location. In particular, as described above, crosstalk cancellation may be achieved by applying a particular signal processing filter to the outputs of each speaker. These filters must be selected based on the user location in order to effectively compensate for crosstalk effects. A filter may be applied to the left speaker 11 which acts to apply destructive interference for the signal reaching the user's right ear 22 to suppress the signal from the left speaker 11 received by the user's right ear 22. Similarly, a filter may be applied to the output from the right-hand speaker 12 to suppress the signal received by the user's left ear 21. Since these filters rely on providing destructive interference to remove the signal they are highly dependent on the location of the user's ears relative to the speakers. For this reason, known 3D audio compensation methods result in a tight sweet spot location in which the user 20 must be positioned to experience 3D audio effects.

The present invention involves repeatedly determining the user location during use of the video gaming system so that the filters applied to the output of the left 11 and right 12 speakers may be adjusted according to the current user location. Figure 3 shows the user 20 at a first location L1, holding controller 40 during use of the video gaming system. An audio signal (the calibration signal) 11 C₁, 11 Cz is output by the left speaker 11 and right speaker 12 and received by a microphone 41 in the controller 40. Based on the signals the video gaming system is able to determine the location of the controller 40 relative to the speakers 11, 12. In particular, the location of the speakers 11, 12 may be known by the video gaming system for example based on an initial setup configuration routine. In this way, the location of the controller 14 may be determined based on time-of-flight measurements of the calibration signals 11C, 12C output by each of the left and right speakers 11, 12.

The left speaker 11 and right speaker 12 may output a different calibration signal 11C, 12C. Since the gaming system knows the time at which each calibration signal 11C, 12C was output by the corresponding loudspeaker 11, 12 and is aware of the time at which these signals 11C. 12C are received by the microphone 41 of the controller 40, a processing unit of the video gaming system can calculate the current location of the controller 40 relative to each of the left and right speakers 11, 12. Since the calibration signals 11C, 12C are output on a continual basis (i.e. continuously, periodically and/or intermittently) the processing unit can continually calculate the location of the user. In this way, as shown in Figure 3, as the user moves from location L1 to location L2 the time of flight of the calibration signals from each respective speaker 11, 12 changes. In particular, the time-of-fight of the calibration signal from the left speaker 11 is reduced and the time of flight of the calibration signal 12C from the right speaker 12 is increased. From these measurements the new location of the controller 40 at location L2 may be calculated and, in response, the filters applied to the output of the left speaker 11 and right speaker 12 adjusted to cancel the crosstalk effects at the new location L2, effectively moving the sweet spot with the user from L1 to L2.

As described above it is necessary to provide a filter to the signal output by both of the left and right speakers in order to compensate for the change in user location. These filters may be calculated based on known methods of crosstalk calculation and/or HRTF creation methods. Although in Figure 3 only two loudspeakers are shown 11, 12 in other examples of the invention there may be a different number of loudspeakers, for example three, four or five loudspeakers, possibly implemented as part of a surround sound system. In these examples a different calibration signal may be output by two or more of the loudspeakers in order to determine the user location based on time-of-flight measurements. In the case of three or more loudspeakers, a different calibration signal may be output by each of three of more of the speakers, allowing the user location to be determined with higher precision. This may allow the filters (i.e. the compensation filters applied to the left and right speaker outputs) to be adjusted more precisely.

As described above the left calibration signal 11C and right calibration signal 12C output on a continual basis during use of the video game system. This means that, rather than determining a user location only once on startup or during a calibration routine, a calibration signal is output continually during use of the video gaming system. The calibration signal maybe output continuously or on a recurring basis (i.e. periodically or intermittently). This is what allows the user location to be monitored during use of the videogame system to repeatedly adjust the game audio output by applying varying filters to compensate for the changing user location.

A difficulty with this method is that the calibration signal (i.e. audio signal) that is output continually may interfere with gameplay and negatively impact the user experience. There are a number of options within the scope of the present invention for addressing this technical challenge. Firstly, the method may involve determining the presence of a break in gameplay and only output the calibration signal during the break in gameplay. For example, the calibration signal may be output every time the game is paused, when part of the game is loading, when a user accesses a menu for other functionality outside of the normal gameplay or any other pause or break in gameplay.

Alternatively or additionally the calibration signal may be provided by part of the in-game audio. The in-game audio may comprise music, dialogue, sound effects or other audio, and may include diegetic and nondiegetic aspects. Any one of these aspects, or a component of one of these aspects of the in-game audio could be used to encode the calibration signal. For example the calibration signal could comprise a segment of music that recurs multiple times during gameplay. Alternatively it could comprise a recurring sound effect which happens multiple times during gameplay. The video gaming system can use these aspects of the in-game audio as calibration signals, calculating the time-of-flight as described above to determine the location of the user device 40.

More generally, the method may comprise selecting a portion of upcoming in-game audio, determining when the portion of in-game audio is output by the speakers and determining when the portion of in-game audio is received by the microphone to determine the location of the user device 40. The method could involve determining a current section of gameplay, selecting a portion of upcoming in-game audio within the current section of gameplay to use as a calibration signal, determining the time of which the selected portion of in game audio is output by the left and right speakers recording the time at which the selected portion in game audio is received by the microphone to controller and determining the location of the user based on the time-of-flight measurement. In this way, the method can be implemented by selecting any portion of the in-game audio to use as calibration signal and calculating be location for user on this basis. By using the in-game audio to determine user location rather than a specific calibration signal it is possible to continually determine the user location without disrupting the gameplay experience by using a dedicated calibration signal. Preferably the calibration signal is a wide band signal, i.e. comprises a wide range of frequencies. The greater range of frequencies the more effective the signal for compensating for user position. For example, white noise is "full band", comprising all frequencies and therefore would provide an effective calibration signal. In examples where the calibration signal is provided during gameplay, white noise is unlikely to be usable due to the disruption to a user. However, there may be other in-game sounds that are relatively wide band that could be used as effective calibration signals. For example, a relatively wideband in game-sound effect such as the sound of rain or static could be used. Alternatively a combination of sound effects that together span a wide range of frequencies could be used. In this way, a wide range of in-game sound effects could be used in different combinations to provide a range of frequencies in the calibration signal.

In another example of the invention, in order to address the technical challenge of using a continuous calibration signal without disrupting gameplay, the method may involve outputting an ultrasound signal as the calibration signal. In this way the user will not hear the calibration signal and it will not disrupt the user experience. The ultrasound signal could be output continuously, periodically or intermittently during gameplay with the location is a determined based on the received calibration signal at the microphone to use a device 40. In these examples the video game system may require loudspeakers 11, 12 configured to output an ultrasound signal and a user device 40 with a microphone 41 configured to receive an ultrasound signal. Where an ultrasound signal is used, this is preferably a white noise signal or sine sweep to capture the range of frequencies.

As described above the calibration signals 11C, 12C may be used to determine the specific location of the microphone of the user device 40. In the illustrated example, the user device is a controller but it may be another type of user device such as wearable device, headset or smartphone. Irrespective of the user device 40 implemented, the method may comprise an additional step of estimating the position of the user 20, or more specifically the user's ears 21, 22, based on the determined location of the user device 40. For example, in the case of the use device 40 being a controller, the method may comprise inferring the location of the user's ears 21, 22 based on the determined location of the controller. This calculation may be based on a fixed, predetermined offset between the location of the microphone and the user's ears 21, 22. The offset may be determined based on the average displacement of the controller during gameplay by an average user or it may be configured for a specific user during a calibration routine. For example, the user 20 may play the game in front of a camera, which records their average controller location during use of the video gaming system and determines the user's average offset between the location of the controller and their ears during gameplay. In other examples the user may input physical measurements to allow the system to determine the offset for the user between the microphone and the users ears 21, 22.

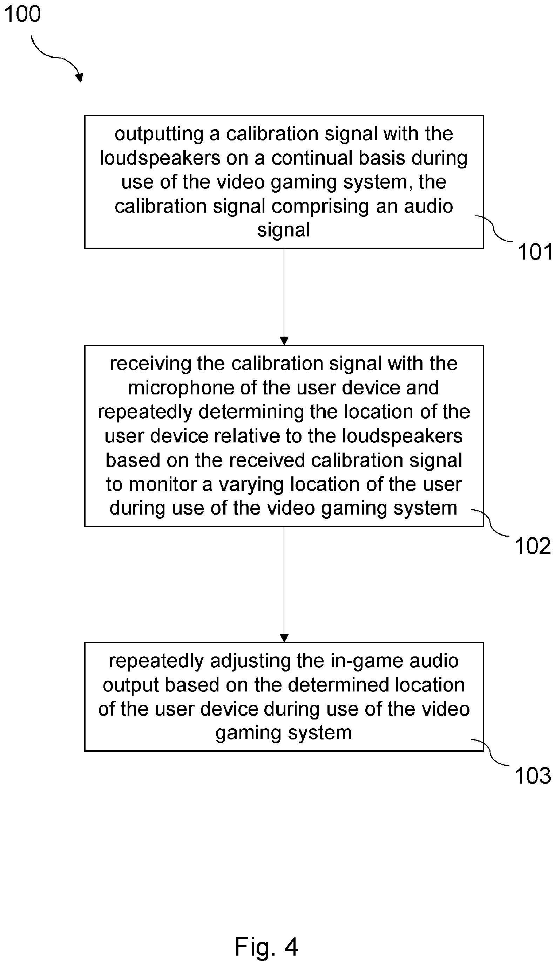

Figure 4 illustrates a flow diagram showing the broadest aspects of the method 100, where the method comprises a first step 101 comprises outputting calibration signal with the loudspeakers on a continual basis during use the video game system comprising an audio signal. Method 100 comprises a second step of receiving a calibration signal with the microphone of the user device and repeatedly determining the location relative to the loudspeakers based on the received calibration signal to monitor a varying location of the user during use of the video gaming system. Method comprises a third step of repeatedly adjusting in-game audio output based on the determined location of the user device during use of the video gaming system.

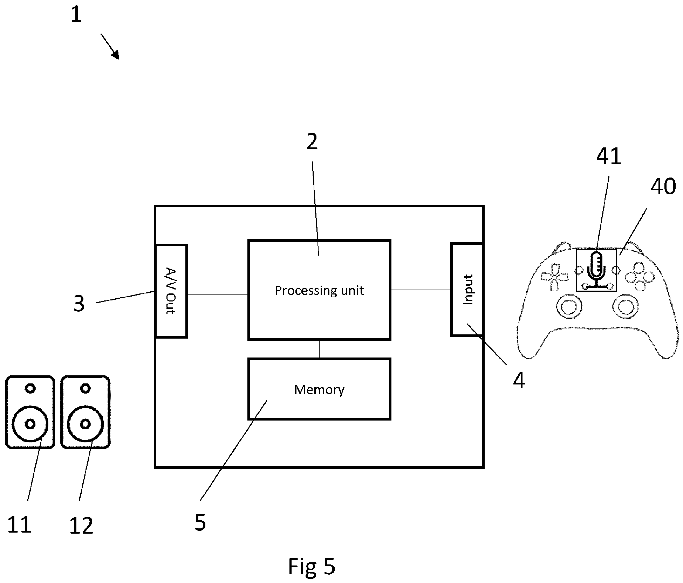

Figure 5 schematically illustrates a video gaming system 1 according to the present invention. The video gaming system 1 comprises an audio output 3 for connection to loudspeakers 11, 12, an input connection 4 for connecting to a user device, such as a controller 40 comprising a microphone 41 and a processing unit 2. The processing unit 2 is configured to output a calibration signal to the audio output on a continual basis during use of the video gaming system 1, where the calibration signal comprises an audio signal. The processing unit 2 is further configured to receive return signal from the input connection when the calibration signal is received with a microphone 41 of the user device 40 connected to the input connection 4. The processing unit 2 is configured to repeatedly determine the location of the user device 40 relative to the loudspeakers 11, 12 connected to the audio output 3, based on the return signal (i.e. the received calibration signal) to monitor a varying location of the user during use of the video gaming system 1. The processing unit 2 is further configured to repeatedly adjust the in-game audio output based on the determined location of the user device during use the video gaming system. The video gaming system may further comprise memory 5 which may hold calibration information such as the relative orientation of the loudspeakers connected to the audio output 3 and filters to be applied to the audio outputs for the connected loudspeakers by the processing unit, depending on the calculated location of the user during the use of the video gaming system 1.

## Claims

1. A computer-implemented method of adjusting an in-game audio output of a video gaming system, where the video gaming system comprises loudspeakers for outputting the in-game audio output and a user device comprising a microphone, the method comprising:
outputting a calibration signal with the loudspeakers on a continual basis during use of the video gaming system, the calibration signal comprising an audio signal;
receiving the calibration signal with the microphone of the user device and repeatedly determining the location of the user device relative to the loudspeakers based on the received calibration signal to monitor a varying location of the user during use of the video gaming system;
repeatedly adjusting the in-game audio output based on the determined location of the user device during use of the video gaming system.

2. The computer-implemented method of any preceding claim 1 wherein the in-game audio comprises three-dimensional audio and adjusting the in-game audio output comprises:
applying a correction to the in-game audio output to compensate for the location of the user relative to the loudspeakers.

3. The computer-implemented method of any preceding claim wherein the method comprises:
determining a crosstalk correction based on the determined location of the user device relative to the loudspeakers;
applying the crosstalk correction to the in-game audio output.

4. The computer-implemented method of any preceding claim wherein outputting the calibration signal with loudspeakers on a continual basis during use of the video gaming system comprises:
outputting the calibration signal continuously or on a recurring basis.

5. The computer-implemented method of any preceding claim wherein the method comprises:
determining a break in gameplay and outputting the calibration signal during the break in gameplay.

6. The computer-implemented method of claim 5 wherein the method comprises one or more of:
determining when the gameplay is paused and outputting the calibration signal when the gameplay is paused;
determining a break when game data is loading and outputting the calibration signal during the break when game data is loading.

7. The computer-implemented method of any preceding claim wherein the calibration signal is provided by part of the in-game audio.

8. The computer-implemented method of claim 7 wherein the calibration signal comprises one or more of:
a recurring segment of music;
a recurring sound effect.

9. The computer-implemented method of claim 7 or claim 8 wherein the method comprises:
determining a current stage of gameplay;
selecting a portion of the in-game audio at the determined stage of gameplay to use as a calibration signal;
receiving the portion of in-game audio with the microphone of the user device;
determining the location of the user device relative to the loudspeakers based on the received portion of in-game audio to monitor a varying location of the user during use of the video gaming system.

10. The computer-implemented method of any of claims 7 to 9 wherein the method comprises determining multiple portions of in-game audio to use as a calibration signal, where each portion of in-game audio comprises different frequencies.

11. The computer-implemented method of any preceding claim wherein the calibration signal comprises an ultrasound signal and comprises outputting the ultrasound signal continuously or periodically during gameplay.

12. The computer-implemented method of any preceding claim wherein the user device comprises a controller, the method comprising:
receiving the calibration signal with a microphone of the controller.

13. The computer-implemented method of claim 13, the method comprising:
estimating the position of the user relative to the loudspeakers based on the determined location of the user device;
repeatedly adjusting the in-game audio based on the estimated position of the user during use of the video gaming system.

14. The computer-implemented method of any preceding claim wherein determining the location of the user device relative to the loudspeakers based on the received calibration signal comprises:
determining a time-of-flight measurement of each of two or more calibration signals output by two or more respective loudspeakers to the microphone of the user device;
determining the location of the user device relative to the loudspeakers based on the time-of-flight measurements;
repeatedly adjusting the in-game audio based on the estimated position of the user during use of the video gaming system.

15. A video gaming system comprising
an audio output for connection to loudspeakers;
an input connection for connection to a user device comprising a microphone;
a processor configured to:
output a calibration signal to the audio output on a continual basis during use of the video gaming system, the calibration signal comprising an audio signal;
receive a return signal from input connection when the calibration signal is received with the microphone of the user device and repeatedly determine the location of the user device relative to the loudspeakers based on the received return signal to monitor a varying location of the user during use of the video gaming system;
repeatedly adjust the in-game audio output based on the determined location of the user device during use of the video gaming system.
